# EUROPÄISCHE PATENTSCHRIFT

(11) **EP 2 490 893 B1**
(45) Veröffentlichungstag und Bekanntmachung des Hinweises auf die Patenterteilung: **11.12.2013**
(21) Anmeldenummer: 09741236.5
(22) Anmeldetag: 23.10.2009
(51) Int. Cl.: B41C 1/14, B41N 1/24

(54) **VERFAHREN ZUM HERSTELLEN PERFORIERTER ODER TEILWEISE PERFORIERTER SCHABLONEN MIT RELIEF**
METHOD FOR PRODUCING PERFORATED OR PARTIALLY PERFORATED TEMPLATES WITH RELIEFS
PROCÉDÉ DE FABRICATION DE POCHOIRS PERFORÉS OU PARTIELLEMENT PERFORÉS PRÉSENTANT UN RELIEF

(43) Veröffentlichungstag der Anmeldung: 29.08.2012
(73) Patentinhaber: Stork Prints Austria GmbH, 6336 Langkampfen (AT)
(72) Erfinder: WEFERS, Lothar, 83080 Oberaudorf (DE); JUFFINGER, Josef, A-6335 Thiersee (AT)
(74) Vertreter: Ter Meer Steinmeister & Partner
(86) Internationale Anmeldenummer: PCT/EP2009/007608
(87) Internationale Veröffentlichungsnummer: WO 2011/047702

(56) Entgegenhaltungen:
- EP-A1- 0 913 730
- EP-A1- 1 884 582
- DE-A1-102005 023 533
- NL-C2- 1 012 100

## Beschreibung

Die Erfindung betrifft ein Verfahren zum Herstellen perforierter oder teilweise perforierter Schablonen, die auf ihrer Oberseite ein Relief mit einer Vielzahl von Öffnungen aufweisen, deren Konturen einem gewünschten Muster entsprechen, sowie derartige Schablonen.

Aus der EP 1 884 582 B1 ist bereits ein Verfahren zur Herstellung einer Schablone oder eines Siebes bekannt, bei dem zunächst ein Siebkörper bereitgestellt wird, der eine Vielzahl von Durchgangsöffnungen aufweist, die sich von der Oberseite zur Rückseite hin erstrecken. Um in der Oberseite ein Relief auszubilden, werden tiefer liegende Bereiche oder Öffnungen entsprechend einem gewünschten Muster auf chemischem Wege durch Ätzen oder mittels Laserstrahlung abgetragen. Der Siebkörper, der mit einer Vielzahl von Durchgangsöffnungen versehen ist, kann dabei grundsätzlich aus nichtmetallischen Werkstoffen, wie z.B. Kunststoff, Keramik, natürlichen Harz- oder Lackmaterialien, die zur Ausbildung stabiler Flächenelemente geeignet sind, Verbundmaterialien oder einer Kombination davon bestehen, jedoch wird hier nur die Herstellung von Siebkörpern aus Metall, wie Nickel, Kupfer oder Aluminium oder Legierungen davon im Einzelnen beschrieben.

Aus der US 2008/0193790 A1 ist eine Siebtrommel bekannt, die zur Herstellung von Vliesstoffen mittels eines Flüssigkeitsstrahl-Verfestigungsverfahrens dient. Die Siebtrommel weist dabei auf ihrer Oberseite, auf die das Fasermaterial aufgebracht wird, tiefer liegende Bereiche oder Öffnungen auf, deren Konturen einem gewünschten Muster entsprechen. Die Siebtrommel wird dabei in zwei Phasen galvanisch hergestellt. In einer ersten Phase wird ein Trägersieb mit einer Vielzahl von Durchgangsöffnungen erzeugt. Nach Erreichen der gewünschten Dicke wird dann in einer zweiten Phase die Dicke der Siebtrommel nur dort weiter erhöht, wo erhabene Bereiche vorliegen sollen, so dass tiefer liegende Bereiche oder Öffnungen eines Reliefs entstehen. Die Wände der Öffnungen des Reliefs sind dabei leicht nach außen geneigt.

Aus der DE 10 2007 059 794 A1 ist ein Verfahren zur Herstellung einer Siebdruckschablone bekannt, bei dem aus einem metallischen Trägersubstrat von der späteren Rakelseite her Vertiefungen herausgearbeitet werden, um ein Trägernetz zu erzeugen. Auf der späteren Substratseite wird dann die zu druckende Struktur durch weitere Vertiefungen herausgearbeitet, so dass an den Stellen, an denen sich die Fronten der Vertiefungen beider Seiten im Schablonenkörper treffen, Öffnungen für das pastöse Siebgut bilden. Die Herstellung der Schablone erfolgt dabei durch Mikroätzen oder Laserablation.

Aus der NL 1 012 100 C2 ist eine Siebdruckschablone bekannt, bei der in einem Träger mit einer Dicke von ungefähr 0,3 mm Drucköffnungen sowie Aussparungen vorgesehen sind. Ein Teil der Drucköffnungen erstrecken sich dabei von der Rück- oder Rakelseite des Trägers bis zur Vorderseite. Andere der Drucköffnungen münden in den Boden einer der Aussparungen, sodass diese über eine Vielzahl von Drucköffnungen mit Druckfarbe versorgt wird. Ferner sind Drucköffnungen vorgesehen, die allein einer Aussparung zugeordnet sind. Zur Herstellung dieser bekannten Siebdruckschablone werden die Drucköffnungen und Aussparungen mittels Laserstrahlung ausgebildet. Der Träger kann dabei aus unterschiedlichsten Kunststoffmaterialien bestehen, denen Sand, Kohlenstoff, Aluminium oder Glas beigefügt sind, um die Kosten zu reduzieren oder die physikalischen Eigenschaften zu modifizieren. Es können auch Laminate aus zwei oder mehr verschiedenen Kunststofflagen vorgesehen sein. Ferner ist es möglich, den Träger auf der Rakelseite mit einem Metallbelag zu versehen.

Aus der EP 0 913 730 A1 ist ein weiteres Verfahren zum Herstellen einer Siebdruckschablone bekannt, bei dem ein dünner Siebzylinder mit einer Fotolackschicht versehen ist. Die Fotolackschicht kann eine wellige Oberfläche oder eine ebene Oberfläche aufweisen. Zum mustergemäßen Strukturieren der Fotolackschicht wird eine Abdeckschicht aufgebracht, die dann mit Hilfe eines Laserstrahls mustergemäß strukturiert wird. Anschließend erfolgt eine großflächige Belichtung der Fotolackschicht, die anschließend entwickelt wird, um, je nach Art des verwendeten Fotolacks, die belichteten oder nicht belichteten Bereiche zur Herstellung der Öffnungen der Siebdruckschablone aus den Öffnungen des Siebes zu entfernen.

Derartige Herstellungsverfahren ermöglichen jedoch nur begrenzte Reliefhöhen. Im Falle von galvanischen Schablonen ist es ferner von Nachteil, dass sich die Durchgangsöffnungen mit zunehmender Dicke immer mehr verjüngen, was Reliefhöhen weiter einschränkt.

Davon ausgehend liegt der Erfindung die Aufgabe zugrunde, ein weiteres Verfahren zur Herstellung von Schablonen sowie von verbesserten Schablonen bereitzustellen, das größere Reliefhöhen und damit erweiterte Gestaltungsfreiheit für aufzubringende Muster ermöglicht.

Diese Aufgabe wird erfindungsgemäß durch das Verfahren nach Anspruch 1 und die Schablone nach Anspruch 10 gelöst. Vorteilhafte Ausgestaltungen und Weiterbildungen der Erfindung sind in den Unteransprüchen beschrieben.

Erfindungsgemäß wird also eine Schablone aus einem Schablonenkörper durch Abtragen von Material zur Reliefbildung mittels Laser- oder Plasmastrahlung hergestellt, der eine Reliefschicht aus nicht-metallischem Material aufweist. Dabei werden zumindest im Bereich des Bodens der Öffnungen des Reliefs Durchgangsöffnungen vorgesehen.

Durch das direkte Abtragen von Material aus der Reliefschicht lassen sich je nach Anwendungsfall und Dicke der Reliefschicht Relieftiefen von einem bis mehreren Millimetern ohne weiteres erzielen. Der Einsatz von Laser- oder Plasmastrahlung, insbesondere von Laser- oder Plasmastrahlung hoher Energiedichte ergibt eine große Gestaltungsfreiheit von Schablonen mit Mustern für die unterschiedlichsten Anwendungen. Insbesondere wird die Gestaltungsfreiheit zum Entwerfen gewünschter Muster dadurch verbessert, dass durch den Einsatz von Strahlung zur Strukturierung der Schablonen unterschiedlichste Materialien für die Schablonen vorgesehen werden können.

Erfindungsgemäß wird also ein Schablonenkörper bereitgestellt, der eine Reliefschicht, die insbesondere nicht-perforiert ist, aus Nichtmetall und auf der Rückseite der Reliefschicht als perforierte Trägerschicht ein Metallsieb aufweist, anschließend wird das Material der Reliefschicht mittels Laser- oder Plasmastrahlung zur Ausbildung der Vielzahl von Öffnungen des Reliefs mustermäßig abgetragen, wobei zumindest im Bodenbereich der Öffnungen des Reliefs vorgesehene Durchgangsöffnungen, die sich zu einer zur Oberseite entgegengesetzten Rückseite hin erstrecken, durch zumindest teilweises Freilegen der Öffnungen in der Trägerschicht mittels Laser- oder Plasmastrahlung gebildet werden.

Dabei können die Durchgangsöffnungen im Bodenbereich der Öffnungen des Reliefs durch vollständiges Abtragen der Reliefschicht freigelegt werden.

Das Ausbilden oder Freilegen der Durchgangsöffnungen mittels geeigneter Laser- oder Plasmastrahlung hat den Vorteil, dass die gesamte Bearbeitung des Schablonenkörpers in einem oder mehreren Schritten in ein und derselben Bearbeitungsstation durchgeführt werden kann.

Ferner ist es möglich, falls dies, wie z.B. bei der Wasserstrahlverfestigung von Faser- oder Vliesstoffen erforderlich ist, dass in einem Plateaubereich außerhalb der Öffnungen des Reliefs nicht musterbildende Öffnungen oder Perforationen mittels Laserstrahlung in die Reliefschicht eingebracht werden, die mit den Öffnungen der Trägerschicht deckungsgleich sind, um Durchgangsöffnungen zu bilden. Es ist jedoch auch möglich, die nicht musterbildenden Öffnungen oder Perforationen so auszubilden, dass sie sich in Form, Größe und/oder Anordnung von den Öffnungen der Trägerschicht unterscheiden. Auf diese Weise lässt sich die Durchlässigkeit der Schablone in verschiedenen Schablonen oder Musterbereichen unterschiedlich gestalten, um so die Musterbildung zu unterstützen.

Die Variationsmöglichkeiten innerhalb von Mustern wird weiter erhöht, wenn Material der Reliefschicht mittels Laserstrahlung auch außerhalb der Öffnungen abgetragen wird, so dass Plateaubereiche außerhalb der Öffnungen des Reliefs unterschiedliche Höhen aufweisen, dabei können wie auch bei gleichen Plateauhöhen die Wände der Öffnungen zum umgebenden Plateaubereich hin beim Ausbilden der Öffnungen geneigt, abgeschrägt, abgerundet oder treppenförmig abgestuft werden, was zweckmäßigerweise durch Modulation der Strahlungsleistungsdichte erfolgt.

Ferner kann die Oberfläche der Plateaubereiche außerhalb der Öffnungen mit einer regelmäßigen, zufälligen oder pseudozufälligen Mikrostruktur versehen werden.

Darüber hinaus kann die Oberfläche der Plateaubereiche oder die gesamte frei liegende Oberfläche der Reliefschicht mit einer Beschichtung versehen werden, die vorzugsweise aus Metall oder geeigneten Teflonen besteht, um die Oberflächeneigenschaften an einen gewünschten Einsatzzweck anzupassen. Derartige Beschichtungen können auf vielfältige Weise, insbesondere chemisch, galvanisch, sprüh- oder drucktechnisch aufgebracht werden.

Eine erfindungsgemäße Schablone weist also zumindest eine Reliefschicht aus Nichtmetall, in deren Oberseite ein Relief mit einer Vielzahl von Öffnungen ausgebildet ist, deren Konturen einem gewünschten Muster entsprechen, sowie auf der Rückseite der Reliefschicht eine als perforierte Trägerschicht ein Metallsieb auf, die sich zu einer zur Oberseite entgegengesetzten Rückseite hin erstrecken, und die im Bodenbereich der Öffnungen des Reliefs zumindest teilweise freigelegt sind.

Weist die Reliefschicht in einem Plateaubereich außerhalb der Öffnungen des Reliefs nicht musterbildende Durchgangsöffnungen oder Perforationen auf, die mittels Laserstrahlung eingebracht sind, so ist es zweckmäßig, wenn diese mit den Öffnungen der Trägerschicht deckungsgleich sind.

Es ist aber auch möglich, dass die nicht musterbildenden Durchgangsöffnungen oder Perforationen sich in Form, Größe und/oder Anordnung von den Öffnungen der Trägerschicht unterscheiden.

Eine Weiterbildung der Erfindung zeichnet sich dadurch aus, dass das Metallsieb galvanisch hergestellt ist.

Wird anstelle eines galvanischen Metallsiebes ein Metallsieb aus Drahtgewebe eingesetzt, so ist es vorteilhaft, wenn dieses mit einer galvanischen Oberflächenbeschichtung versehen ist. Es ist jedoch auch vorstellbar, ein Sieb aus Nirosta-Stahl zu verwenden. Im Falle einer Oberflächenbeschichtung ist das Metallsieb jedoch besonders stabil, was bei einer Druckbeanspruchung vorteilhaft ist.

Um die Gestaltungsmöglichkeiten der Muster weiter zu erhöhen, ist bei einer zweckmäßigen Ausgestaltung der Erfindung vorgesehen, dass Plateaubereiche außerhalb der Öffnungen des Reliefs unterschiedliche Höhen aufweisen, wobei wie bei Schablonen mit Mustern mit einheitlicher Plateauhöhe, die Wände der Öffnungen zum umgebenden Plateaubereich hin geneigt, abgeschrägt, abgerundet oder treppenförmig abgestuft sein können.

Um die Oberflächeneigenschaften der Schablone an den jeweiligen Verwendungszweck anzupassen, ist vorgesehen, dass die Oberfläche der Plateaubereiche außerhalb der Öffnungen mit einer regelmäßigen, zufälligen oder pseudozufälligen Mikrostruktur versehen ist, und/oder dass die Oberfläche der Plateaubereiche oder die gesamte freiliegende Oberfläche der Reliefschicht mit einer Beschichtung versehen ist.

Die Erfindung wird im Folgenden anhand von in der Zeichnung dargestellten Ausführungsbeispielen näher erläutert. Es zeigen:
Figur 1 einen schematischen Schnitt durch eine Schablone, die nur im Bodenbereich von Öffnungen eines Reliefs perforiert ist;
Figur 2 einen schematischen Schnitt durch eine erfindungsgemäße Schablone, bei der eine Reliefschicht auf einer Trägerschicht ausgebildet ist, die nur im Bodenbereich der Öffnungen des Reliefs perforiert, also mit Durchgangsöffnungen versehen ist;
Figur 3 eine schematische Draufsicht auf eine erfindungsgemäße Schablone gemäß Figur 1 oder 2;
Figur 4 einen schematischen Schnitt durch eine erfindungsgemäße Schablone, ähnlich Figur 2, bei der die Trägerschicht als Sieb ausgebildet und über ihre gesamte Fläche perforiert ist;
Figur 5 einen schematischen Schnitt durch eine erfindungsgemäße Schablone, ähnlich Figur 4, bei der Teile der Reliefschicht im Bodenbereich von Öffnungen des Reliefs belassen wurden;
Figur 6 einen schematischen Schnitt durch eine erfindungsgemäßen Schablone ähnlich Figur 4, bei der Plateaubereiche außerhalb der Öffnungen unterschiedliche Höhen aufweisen;
Figur 7 einen schematischen Schnitt durch eine erfindungsgemäße Schablone ähnlich Figur 4, bei der die Oberfläche der Plateaubereiche außerhalb der Öffnungen des Reliefs strukturiert ist;
Figur 8 verschiedene schematische Schnitte im Bereich der Ränder der Öffnungen des Reliefs;
Figur 9 einen schematischen Schnitt durch eine erfindungsgemäße Schablone ähnlich Figur 4, bei der die Oberfläche der Plateaus beschichtet ist;
Figur 10 einen schematischen Schnitt durch eine erfindungsgemäße Schablone ähnlich Figur 4 oder 9, bei der die gesamte Oberfläche des Reliefs beschichtet ist;
Figur 11 einen schematischen Schnitt durch eine erfindungsgemäße Schablone ähnlich Figur 7, bei der die gesamte Oberfläche des Reliefs beschichtet ist;
Figur 12 einen schematischen Schnitt durch eine erfindungsgemäße Schablone ähnlich Figur 4, bei der auch im Plateaubereich Durchgangslöcher oder Perforationen ausgebildet sind, die mit den Durchgangsöffnungen oder Perforationen der Trägerschicht fluchten;
Figur 13 einen schematischen Schnitt durch eine erfindungsgemäße Schablone ähnlich Figur 12, bei der die Oberfläche der Plateaus strukturiert ist;
Figur 14 einen schematischen Schnitt durch eine erfindungsgemäße Schablone ähnlich Figur 13, bei der die gesamte Oberfläche des Reliefs beschichtet ist;
Figur 15 eine schematische Draufsicht auf eine erfindungsgemäße Schablone gemäß Figur 12 bis 14;
Figur 16 einen schematischen Schnitt durch eine erfindungsgemäße Schablone ähnlich Figur 12, bei der jedoch die Perforationen oder Durchgangslöcher in der Reliefschicht sich in Form, Größe und/oder Anordnung von den Durchgangsöffnungen oder Perforationen der Trägerschicht unterscheiden; und
Figur 17 eine schematische Draufsicht auf einen Musterbereich einer erfindungsgemäßen Schablone gemäß Figur 16.

In den verschiedenen Figuren der Zeichnung sind einander entsprechende Elemente mit gleichen Bezugszeichen versehen.

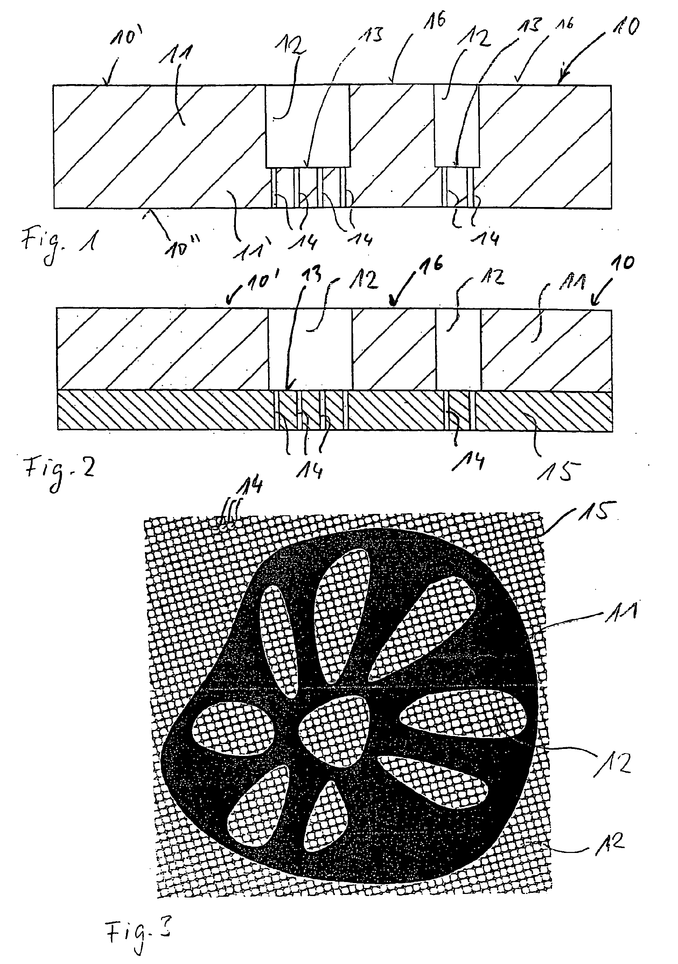

Wie in Figur 1 dargestellt, weist eine Schablone, die als teilweise perforierte Platte oder als Zylinder ausgebildet ist, einen Schablonenkörper 10 auf, der plattenförmig oder zylinderförmig ausgebildet sein kann, der eine Reliefschicht 11 aufweist, in der Ausnehmungen oder Öffnungen 12 ausgebildet sind, deren Konturen einem gewünschten Muster entsprechen. Im Bodenbereich 13 der Öffnungen 20 ist ein Trägerschichtabschnitt 11' des Schablonenkörpers 10 mit Perforationen oder Durchgangsöffnungen 14 versehen, die je nach Anwendungsbereich der Schablone einen Luft- oder Flüssigkeitsdurchlass ermöglichen.

Ein Hauptanwendungsgebiet der erfindungsgemäßen Schablone ist die Flüssigkeitsstrahlverfestigung von Faservliesen bei der Herstellung nicht gewebter Vliesstoffe, die mit reliefförmigen Mustern versehen werden. Die Öffnungen 12 oder Vertiefungen im Schablonenkörper entsprechen dabei dem dem Vliesstoff aufzuprägenden Muster.

Die erfindungsgemäße Schablone lässt sich aber auch beim Streudruck einsetzen, wo die Schablone dann als Zylinder ausgebildet ist, an dessen Inneres ein Vakuum angelegt ist. Die Öffnungen 12 lassen sich dann mit Schüttgut, also mit Granulat oder kleinen Pellets füllen, die durch das im Inneren der zylindrischen Schablone anliegende Vakuum in den Öffnungen 12 gehalten werden. Mit Hilfe einer innen liegenden Blende lassen sich die Durchgangsöffnungen 14 dann dort vom Vakuum trennen, wo das Schüttgut auf ein im Streudruckverfahren zu bedruckendes Substrat ausgegeben werden soll.

Die erfindungsgemäße Schablone lässt sich auch als Druckplatte oder Druckzylinder im Siebdruck einsetzen, insbesondere dort, wo große Auftragsmengen von saugfähigen Substraten, wie beispielsweise Stoffen oder Teppichen zu bedrucken sind. Hierbei wird die Druckfarbe durch die Durchgangsöffnungen 14 im Bodenbereich 13 der Öffnungen 12 hindurch in diese gedrückt, und aus diesen dann auf das Substrat übertragen.

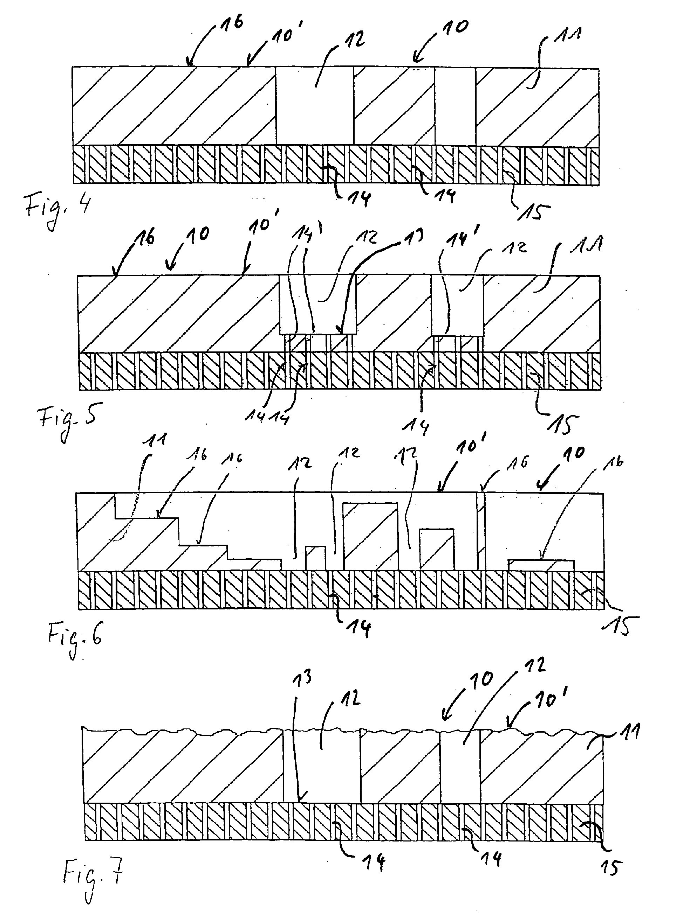

Um hierbei einen Verschleißschutz gegen Rakelkräfte zu erhalten, ist es zweckmäßig, wenn der Schablonenkörper 10, wie in Figur 2 dargestellt ist, eine separate Trägerschicht 15 aufweist, die aus Metall besteht und, wie weiter in Figur 4 gezeigt ist, insbesondere als Metallsieb ausgebildet ist.

Ferner ist das Perforieren und Prägen von Folien mit einer zylindrischen Schablone möglich, wenn diese ein Relief und eine entsprechende Oberflächenbeschaffenheit aufweist, wie es erfindungsgemäß auf einfache Weise herstellbar ist.

Zum Herstellen einer erfindungsgemäßen Schablone wird zunächst ein Schablonenkörper 10 bereitgestellt, der als Platte oder Zylinder ausgebildet ist. Der Schablonenkörper 10 besteht dabei aus einer durchgehenden Reliefschicht 11, die auf einer von ihrer Oberseite 10' abgewandt liegenden Trägerschicht 15 angeordnet ist.

Die Reliefschicht besteht dabei aus einem Nichtmetall, beispielsweise aus einem künstlichen oder natürlichen Polymer, Gummi, Hartgummi oder anderen vulkanisierten Materialien, Keramik oder geeigneten Silikonen. Für die Trägerschicht 15 eignen sich Metalle. Neben perforierten Metallschichten eignen sich als Trägerschicht 15 insbesondere Metallsiebe aus Nickel, Kupfer oder anderen Metallen, die galvanisch hergestellt sein können, oder die als Drahtgewebe ausgebildet sind. Bei derartigen Verbundmaterialien wird die nicht metallische Reliefschicht mit der metallischen Trägerschicht 15 stoffschlüssig verbunden, um den als Schichtkörper ausgebildeten Schablonenkörper 10 zu erhalten.

Unter Verwendung von Strahlung, insbesondere von Laser- oder Plasmastrahlung wird dann Material der Reliefschicht abgetragen, um das gewünschte Relief mit den Öffnungen 12 und den außerhalb der Öffnungen 12 liegenden Plateaubereichen 16 zu bilden. Nach dem Ausbilden des Reliefs oder beim Ausbilden des Reliefs werden dann die Durchgangsöffnungen 14 im Bodenbereich 13 der Öffnungen 12 in dem Trägerschichtabschnitt 11' oder der Trägerschicht 15 (vgl. Figur 2) ebenfalls durch entsprechendes Abtragen von Material hergestellt.

Wird, wie in Figur 4 gezeigt, als Trägerschicht 15 ein Sieb verwendet, so werden die Durchgangsöffnungen 14 von den Sieböffnungen gebildet. In diesem Fall ist es lediglich erforderlich, die entsprechenden Sieböffnungen freizulegen.

Wird, wie in Figur 5 gezeigt ist, trotz Einsatz einer Trägerschicht 15 Material der Reliefschicht 11 im Bodenbereich 13 der Öffnungen 12 belassen, um beispielsweise bei schmalen Plateaubereichen 16 eine bessere Stabilität und Anhaftung der Reliefschicht 11 im Bereich der kleinen Plateaus zu erhalten, so werden die entsprechenden Sieböffnungen durch Ausbildung von Durchgangsöffnungen 14' in der Reliefschicht gebildet, um die Durchgangsöffnungen 14 zu erhalten.

Wird bei Verwendung eines Siebs aus Drahtgewebe die Reliefschicht im Bereich der Öffnungen freigelegt, so ist es zweckmäßig, wenn das Drahtgewebe galvanisch beschichtet ist, um das Sieb im Kreuzungsbereich der Drähte jeweils zu glätten.

Wie in Figur 6 dargestellt, lassen sich aus der Reliefschicht 11 Reliefs für beliebige Muster herstellen, wobei insbesondere Plateaubereiche 16 der Reliefschicht 11 außerhalb der Öffnungen 12 mit unterschiedlichen Höhen vorgesehen sein können. Die unterschiedlich hohen Plateaubereiche 16 können dabei beispielsweise dadurch erhalten werden, dass die Materialabtragung in mehreren Schritten hintereinander erfolgt oder dass durch Modulation der Laser- oder Plasmaleistung die Energiedichte zur Materialabtragung größer oder kleiner gewählt wird, je nach dem, ob Öffnungen oder Plateaus geringer Höhe bzw. großer Höhe ausgebildet werden sollen.

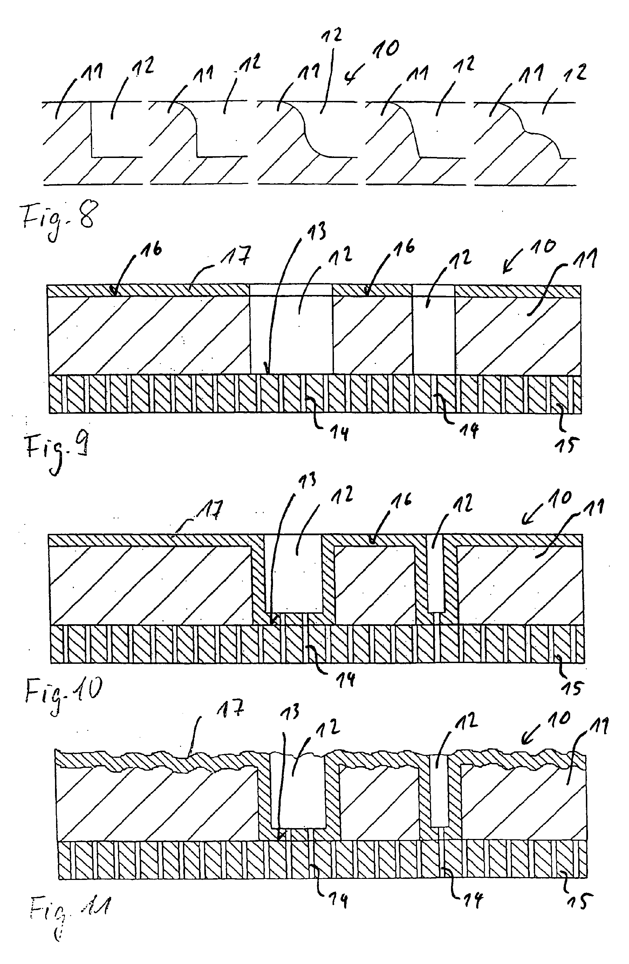

Durch Modulation der Strahlungsleistung lassen sich auch, wie in Figur 8 dargestellt ist, abgerundete und/oder geneigte und/oder gestufte Kantenübergänge zwischen den Plateaus und den Öffnungen herstellen. Um scharfe Kanten (rechtwinklige Kanten) herzustellen, wird die Leistung von 0 unmittelbar auf die gewünschte Höhe geschaltet. Bei abgerundeten Kanten wird die Leistung entsprechend der gewünschten Kantenform in Abhängigkeit vom Vortrieb des Strahlungsstrahls variiert.

Je nach Anwendungsfall kann die Oberseite 10' des Schablonenkörpers 10 auch mit einer zusätzlichen Oberflächenstruktur versehen sein, wie dies in Figur 7 gezeigt ist. Die Oberflächenstruktur kann dabei entweder beim Herstellen der Reliefschicht 11 durch geeignete Verfahren ausgebildet werden, oder sie kann während der Materialabtragung zur Reliefbildung mittels Laser- oder Plasmastrahlung erzeugt werden. Während in Figur 7 eine Mikrostruktur dargestellt ist, die nach Höhe und lateraler Größe zufällig ausgebildet ist, können auch regelmäßige Mikrostrukturen vorgesehen sein, wie sie insbesondere zum Prägen und Perforieren von Folien eingesetzt werden.

Wie in den Figuren 9 bis 10 dargestellt ist, kann die Oberseite der Reliefschicht 11, also nur deren Plateaubereiche oder die gesamte freigelegte Oberfläche der Reliefschicht 11 und gegebenenfalls der Trägerschicht 15 mit einer Beschichtung 17 versehen sein. Die Beschichtung 17 kann dabei eine Metallisierung sein, die chemisch, galvanisch oder sprühtechnisch aufgebracht wurde. Ist die Beschichtung 17 nur auf der Oberseite der Plateaubereiche 16 gewünscht, wie in Figur 9 gezeigt, so lässt sich diese auch drucktechnisch aufbringen.

Sofern die Beschichtung 17 auch im Bodenbereich 13 vorgesehen wird, so ist anschließend ein Freilegen der Durchgangsöffnung 14 in der Trägerschicht 15 erforderlich. Falls ähnlich wie in Figur 1 oder 2 ein nicht-perforierter Trägerschichtabschnitt 11 oder eine nicht-perforierte Trägerschicht 15 vorgesehen ist, so sind die Durchgangsöffnungen 14 nach dem Ausbilden der Beschichtung 17 herzustellen.

Die bisher beschriebenen Ausführungsbeispiele betreffen Schablonen, bei denen die Plateaubereiche 16 außerhalb der Öffnungen 12 keine Perforationen oder Durchgangsöffnungen aufweisen, wie dies in der Draufsicht von Figur 3 dargestellt ist.

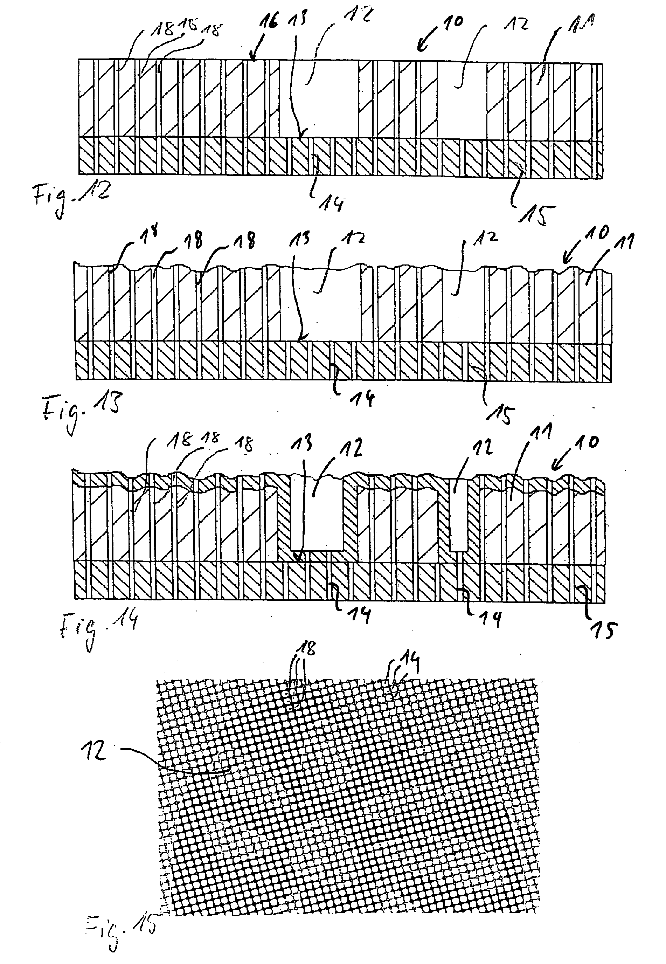

Es ist aber auch möglich, je nach Anwendungsfall und lateraler Größe der Plateaubereiche, diese ebenfalls mit Perforationen oder Durchgangsöffnungen 18 zu versehen, wie dies in den Figuren 12 bis 15 dargestellt ist. Die Perforationen oder Durchgangsöffnungen 18 können dabei bei den Ausführungsbeispielen gemäß Figur 12 oder 13 gleichzeitig mit den Öffnungen 12 oder in gesonderten Arbeitsdurchgängen hergestellt werden. Bei der in Figur 14 gezeigten Schablone mit einer Beschichtung 17 auf der Oberfläche müssen die Perforationen oder Durchgangsöffnungen 18 jedoch in einem separaten Verfahrensschritt nach dem Aufbringen der Beschichtung ausgebildet werden.

Wie in den Figuren 12 bis 15 gezeigt ist, sind die Durchgangsöffnungen 18 in der Reliefschicht 11 mit den Öffnungen in der siebförmigen Trägerschicht 15 ausgerichtet. Bei der Herstellung kann die Reliefschicht 11 bereits perforiert vorgesehen sein und mit der siebförmigen Trägerschicht 15 so ausgebildet werden, dass die Durchgangsöffnungen 18 in der Reliefschicht 11 und der Trägerschicht 15 miteinander ausgerichtet sind. Es ist jedoch auch möglich, eine nicht-perforierte Reliefschicht 11 und Trägerschicht 15 zuerst miteinander zu verbinden und dann die Durchgangsöffnungen 18, welche sich durch beide Schichten hindurch erstrecken, zu erzeugen. Dies ist beispielsweise mittels Laserstrahlung, Plasmastrahlung, eines Wasserstrahls oder mechanisch, insbesondere durch Bohren möglich.

Es ist jedoch auch möglich, dass die Dichte (Anzahl pro Fläche), Verteilung, und laterale Größe der Perforationen oder Durchgangsöffnungen 18 in den Muster- oder Plateaubereichen 16 der Reliefschicht 11 und/oder der Öffnungen in der Trägerschicht voneinander verschieden sind, so lange jeweils ein Teil der Öffnungen in der Reliefschicht 11 und in der Trägerschicht 15 Überlappungsbereiche miteinander aufweisen.

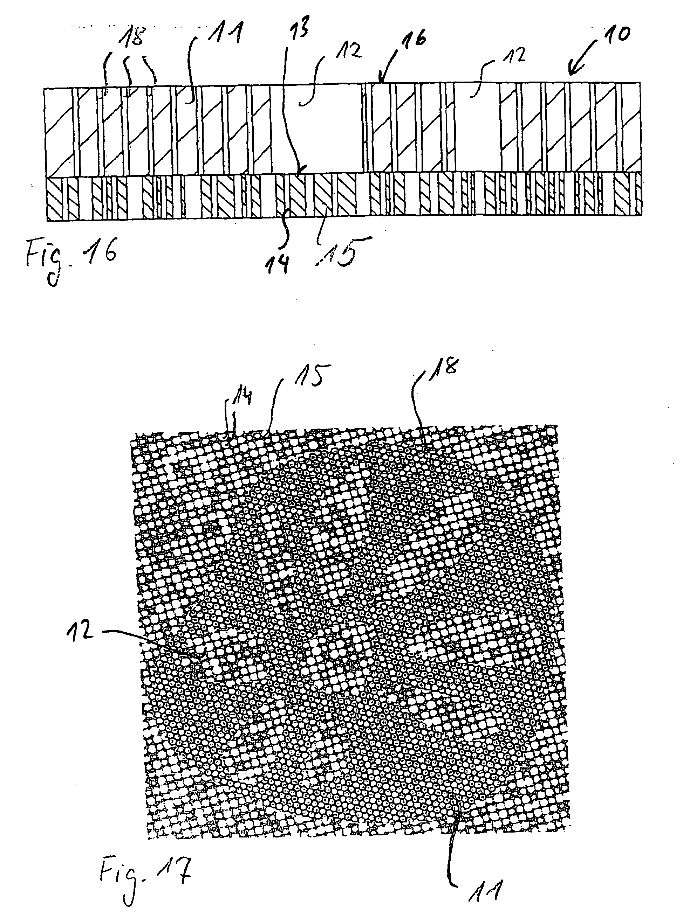

Beispielsweise zeigt Figur 17 in der Trägerschicht 15 eine matrixförmige Anordnung von Öffnungen 12 unterschiedlicher lateraler Größe, während die Durchgangsöffnungen 18 in der Reliefschicht 11 bienenwabenförmig angeordnet sind.

Durch den Einsatz von Laser- oder Plasmastrahlung mit hoher Energiedichte lassen sich erfindungsgemäß in nichtmetallische Abschnitte von Schablonengrundkörpern beliebige mustergemäße Reliefs sowie Perforierungen oder Durchgangsöffnungen ausbilden, wie sie beispielsweise bei der Wasserstrahlverfestigung von Vliesstoffen erforderlich sind. Die Erfindung ermöglicht dabei insbesondere große Relieftiefen im Bereich von 2, 3 oder mehr Millimetern, die mit herkömmlichen Techniken nicht erzielt werden können.

Plasmastrahlung wird dabei für gröbere Strukturen eingesetzt, während mittels Laserstrahlung feine und feinste Strukturen, insbesondere saubere Prägekanten mit gewünschter Formgebung hergestellt werden können. Dabei ist es insbesondere bei der Ausbildung von feinen und feinsten Strukturen zweckmäßig, wenn die Oberfläche der Schablonen beschichtet, also metallisiert oder mit Teflonen oder dergleichen versehen sind, um bestimmte Oberflächenbeschaffenheiten zu erhalten und/oder die Oberfläche gegen Abnutzung zu schützen.

## Patentansprüche

1. Verfahren zum Herstellen einer Schablone, die auf ihrer Oberseite ein Relief (11) mit einer Vielzahl von Öffnungen (12) aufweist, deren Konturen einem gewünschten Muster entsprechen, mit folgenden Schritten:
- Bereitstellen eines Schablonenkörpers (10), der eine Reliefschicht (11) aus Nichtmetall und auf der Rückseite der Reliefschicht (11) als perforierte Trägerschicht (15) ein Metallsieb aufweist, und
- mustergemäßes Abtragen des Materials der Reliefschicht (11) mittels Laser- oder Plasmastrahlung zur Ausbildung der Vielzahl von Öffnungen (12) des Reliefs, wobei die zumindest im Bodenbereich (13) der Öffnungen (12) des Reliefs vorgesehenen Durchgangsöffnungen (14), die sich zu einer zur Oberseite entgegengesetzten Rückseite hin erstrecken, durch zumindest teilweises Freilegen der Öffnungen (14) in der Trägerschicht (15) mittels Laser- oder Plasmastrahlung gebildet werden.

2. Verfahren nach Anspruch 1, wobei die Durchgangsöffnungen (14) im Bodenbereich (13) der Öffnungen (12) des Reliefs durch vollständiges Abtragen der Reliefschicht (11) freigelegt werden.

3. Verfahren nach Anspruch 1 oder 2, wobei zum Ausbilden von Durchgangsöffnungen (14) in einem Plateaubereich (16) außerhalb der Öffnungen (12) des Reliefs nicht musterbildende Öffnungen oder Perforationen mittels Laserstrahlung in die Reliefschicht (11) eingebracht werden, die mit den Öffnungen (14) der Trägerschicht (15) deckungsgleich sind, oder die sich in Form, Größe und/oder Anordnung von den Öffnungen (14) der Trägerschicht (15) unterscheiden.

4. Verfahren nach einem der vorstehenden Ansprüche, wobei Material der Reliefschicht (11) mittels Laserstrahlung auch außerhalb der Öffnungen (12) abgetragen wird, so dass Plateaubereiche (16) außerhalb der Öffnungen (12) des Reliefs unterschiedliche Höhen aufweisen.

5. Verfahren nach einem der vorstehenden Ansprüche, wobei Wände der Öffnungen (12) zum umgebenden Plateaubereich (16) hin beim Ausbilden der Öffnungen (12) geneigt, abgeschrägt, abgerundet oder treppenförmig abgestuft werden.

6. Verfahren nach Anspruch 5, wobei die Übergänge zwischen den Öffnungen (12) und den Plateaubereichen (16) der Reliefschicht (11) durch Modulation der Strahlungsleistungsdichte geneigt, abgeschrägt, abgerundet oder treppenförmig abgestuft werden.

7. Verfahren nach einem der vorstehenden Ansprüche, wobei die Oberfläche der Plateaubereiche (16) außerhalb der Öffnungen (12) mit einer regelmäßigen, zufälligen oder pseudozufälligen Mikrostruktur versehen wird.

8. Verfahren nach einem der vorstehenden Ansprüche, wobei die Oberfläche der Plateaubereiche (16) oder die gesamte freiliegende Oberfläche der Reliefschicht (11) mit einer Beschichtung (17) versehen werden.

9. Verfahren nach Anspruch 8, wobei die Beschichtung (17) aus Metall besteht, das chemisch, galvanisch, sprüh- oder drucktechnisch aufgebracht wird.

10. Schablone mit einem Schablonenkörper (10), der zumindest eine Reliefschicht (11) aus Nichtmetall, in deren Oberseite ein Relief mit einer Vielzahl von Öffnungen (12) ausgebildet ist, deren Konturen einem gewünschten Muster entsprechen, und auf der Rückseite der Reliefschicht (11) als perforierte Trägerschicht (15) ein Metallsieb aufweist, deren bzw. dessen Durchgangsöffnungen (14), die sich zu einer zur Oberseite entgegengesetzten Rückseite hin erstrecken, zumindest im Bodenbereich (13) der Öffnungen (12) des Reliefs zumindest teilweise freigelegt sind.

11. Schablone nach Anspruch 10, wobei die Reliefschicht (11) in einem Plateaubereich (16) außerhalb der Öffnungen (12) des Reliefs nicht musterbildende Durchgangsöffnungen (18) oder Perforationen aufweist, die mittels Laserstrahlung eingebracht sind, die mit den Öffnungen (14) der Trägerschicht (15) deckungsgleich sind, oder die mittels Laserstrahlung eingebracht sind, die sich in Form, Größe und/oder Anordnung von den Öffnungen (14) der Trägerschicht (15) unterscheiden.

12. Schablone nach Anspruch 10 oder 11, wobei das Metallsieb galvanisch hergestellt ist, oder aus einem Drahtgewebe mit einer galvanischen Oberflächenbeschichtung besteht.

13. Schablone nach einem der vorstehenden Ansprüche, wobei Plateaubereiche (16) außerhalb der Öffnungen (12) des Reliefs unterschiedliche Höhen aufweisen.

14. Schablone nach einem der vorstehenden Ansprüche, wobei Wände der Öffnungen (12) zum umgebenden Plateaubereich (16) hin geneigt, abgeschrägt, abgerundet oder treppenförmig abgestuft sind.

15. Schablone nach einem der vorstehenden Ansprüche, wobei die Oberfläche der Plateaubereiche (16) außerhalb der Öffnungen (12) mit einer regelmäßigen, zufälligen oder pseudozufälligen Mikrostruktur versehen ist.

16. Schablone nach einem der vorstehenden Ansprüche, wobei die Oberfläche der Plateaubereiche (16) oder die gesamte freiliegende Oberfläche der Reliefschicht (11) mit einer Beschichtung (17) versehen ist.

## Claims

1. A method for producing a stencil, which has on its upper side a relief (11) with a multiplicity of openings (12), the contours of which correspond to a desired pattern, with the following steps:
- providing a stencil body (10), which has a non-metal relief layer (11), and, on the rear side of the relief layer, as perforated carrier layer, a metal screen, and
- removing the material of the relief layer (11) according to the pattern by means of laser or plasma radiation to form the multiplicity of openings (12) of the relief, the through-openings (14) that are provided at least in the bottom region (13) of the openings (12) of the relief, which extend to a rear side opposite from the upper side being formed by at least partial exposure of the openings in the carrier layer by means of laser or plasma radiation.

2. The method as claimed in claim 1, the through-openings (14) in the bottom region (13) of the openings (12) of the relief being exposed by completely removing the relief layer (11).

3. The method as claimed in claim 1 or 2, non-pattern-forming openings or perforations being introduced into the relief layer (11) in a plateau region (16) outside the openings (12) of the relief by means of laser radiation, these non-pattern-forming openings being congruent with the openings (14) of the carrier layer (15) or differing in shape, size and/or arrangement from the openings (14) of the carrier layer (15), to form through-openings (14).

4. The method as claimed in one of the preceding claims, material of the relief layer (11) also being removed by means of laser radiation outside the openings (12), so that plateau regions (16) outside the openings (12) of the relief have different heights.

5. The method as claimed in one of the preceding claims, walls of the openings (12) being inclined, beveled, rounded or graduated in the form of steps with respect to the surrounding plateau region (16) when forming the openings (12).

6. The method as claimed in claim 5, the transitions between the openings (12) and the plateau regions (16) of the relief layer (11) being inclined, beveled, rounded or graduated in the form of steps by modulation of the radiation power density.

7. The method as claimed in one of the preceding claims, the surface of the plateau regions (16) outside the openings (12) being provided with a regular, random or pseudo-random microstructure.

8. The method as claimed in one of the preceding claims, the surface of the plateau regions (16) or the entire exposed surface of the relief layer (11) being provided with a coating (17).

9. The method as claimed in claim 8, the coating (17) consisting of metal, which is applied chemically, galvanically or by spraying or printing techniques.

10. A stencil with a stencil body (10), which has at least one non-metal relief layer (11), in the surface of which there is formed a relief with a multiplicity of openings (12), the contours of which correspond to a desired pattern, and, on the rear side of the relief layer (11), as perforated carrier layer (15), a metal screen, through-openings (14) of which that extend to a rear side opposite from the upper side being at least partially exposed, at least in the bottom region (13) of the openings (12) of the relief.

11. The stencil as claimed in claim 10, the relief layer (11) having non-pattern-forming through-openings (18) or perforations in a plateau region (16) outside the openings (12) of the relief, these non-pattern-forming openings being introduced by means of laser radiation and congruent with the openings (14) of the carrier layer (15) or being introduced by means of laser radiation and differing in shape, size and/or arrangement from the openings (14) of the carrier layer (15).

12. The stencil as claimed in claim 10 or 11, the metal screen being produced galvanically or consisting of a wire gauze with a galvanic surface coating.

13. The stencil as claimed in one of the preceding claims, plateau regions (16) outside the openings (12) of the relief having different heights.

14. The stencil as claimed in one of the preceding claims, walls of the openings (12) being inclined, beveled, rounded or graduated in the form of steps with respect to the surrounding plateau region (16).

15. The stencil as claimed in one of the preceding claims, the surface of the plateau regions (16) outside the openings (12) being provided with a regular, random or pseudo-random microstructure.

16. The stencil as claimed in one of the preceding claims, the surface of the plateau regions (16) or the entire exposed surface of the relief layer (11) being provided with a coating (17).

## Revendications

1. Procédé pour produire un pochoir qui comporte à sa face supérieure un relief (11) avec une pluralité d'ouvertures (12) dont les contours correspondent à un motif souhaité, comprenant les étapes suivantes :
- on prépare un corps de pochoir (10) qui comprend une couche en relief (11) en matériau non métallique et qui comprend, sur la face postérieure de la couche en relief (11), un crible en métal à titre de couche porteuse perforée (15), et
- on enlève d'après un motif le matériau de la couche en relief (11) au moyen d'un rayonnement laser ou d'un rayonnement à plasma pour la réalisation de la pluralité d'ouvertures (12) du relief, et les ouvertures traversantes (14), qui sont prévues au moins dans la zone de fond (13) des ouvertures (12) du relief et qui s'étendent jusqu'à une face postérieure à l'opposé de la face supérieure, sont formées par dégagement au moins partiel des ouvertures (14) dans la couche porteuse (15) au moyen d'un rayonnement laser ou d'un rayonnement à plasma.

2. Procédé selon la revendication 1, dans lequel les ouvertures traversantes (14) dans la région du fond (13) des ouvertures (12) du relief sont dégagées par enlèvement total de la couche en relief (11).

3. Procédé selon la revendication 1 ou 2, dans lequel pour la réalisation d'ouvertures traversantes (14), on ménage dans la couche en relief au moyen d'un rayonnement laser, des ouvertures ou des perforations, sans former un motif, dans une zone en plateau (16) à l'extérieur des ouvertures (12) du relief, ces ouvertures ou perforations étant identiques aux ouvertures (14) de la couche porteuse (15), ou étant différentes des ouvertures (14) de la couche porteuse (15) quant à la forme, la taille et/ou l'agencement des ouvertures (15).

4. Procédé selon l'une des revendications précédentes, dans lequel le matériau de la couche en relief (11) est supprimé au moyen d'un rayonnement laser également à l'extérieur des ouvertures (12), de sorte que des zones en plateau (16) à l'extérieur des ouvertures (12) du relief ont des hauteurs différentes.

5. Procédé selon l'une des revendications précédentes, dans lequel des parois des ouvertures (12) sont inclinées, chanfreinées, arrondies ou en gradins à la manière d'un escalier en direction de la zone en plateau (16) qui les entoure.

6. Procédé selon la revendication 5, dans lequel les transitions entre les ouvertures (12) et les zones en plateau (16) de la couche en relief (11) sont inclinées, chanfreinées, arrondies ou en gradins à la manière d'un escalier par modulation de la densité de puissance du rayonnement.

7. Procédé selon l'une des revendications précédentes, dans lequel la surface des zones en plateau (16) à l'extérieur les ouvertures (12) est dotée d'une microstructure régulière, aléatoire ou pseudo aléatoire.

8. Procédé selon l'une des revendications précédentes, dans lequel la surface des zones en plateau (16) ou la totalité de la surface libre de la couche en relief (11) sont pourvues d'un revêtement (17).

9. Procédé selon la revendication 8, dans lequel le revêtement (17) est en métal, qui est appliqué par voie chimique, galvanique, par pulvérisation ou par des techniques d'impression.

10. Pochoir comprenant un corps de pochoir (10) qui comporte au moins une couche en relief (11) en matériau non métallique, dans la face supérieure de laquelle est réalisé un relief avec une pluralité d'ouvertures (12) dont les contours correspondent à un motif souhaité, et qui comporte sur la face postérieure de la couche en relief (11) à titre de couche porteuse perforée (15), un crible en métal dont les ouvertures traversantes (14), qui s'étendent jusqu'à une face postérieure opposée à la face supérieure, sont au moins partiellement dégagées au moins dans la zone de fond (13) des ouvertures (12) du relief.

11. Pochoir selon la revendication 10, dans lequel la couche en relief (11) comporte, dans une zone en plateau (16) à l'extérieur des ouvertures (12) du relief, des ouvertures traversantes (18) ou des perforations, qui ne forment pas un motif et qui sont ménagées au moyen d'un rayonnement laser, lesquelles coïncident avec les ouvertures (14) de la couche porteuse (15), ou sont ménagées au moyen d'un rayonnement laser et diffèrent des ouvertures (14) de la couche porteuse (15) quant à la forme, la taille et/ou l'agencement.

12. Pochoir selon la revendication 10 ou 11, dans lequel le crible en métal est réalisé par voie galvanique, ou est constitué par un textile en fils avec un revêtement de surface galvanique.

13. Pochoir selon l'une des revendications précédentes, dans lequel des zones en plateau (16) à l'extérieur les ouvertures (12) du relief présentent des hauteurs différentes.

14. Pochoir selon l'une des revendications précédentes, dans lequel des parois des ouvertures (12) sont inclinées, chanfreinées, arrondies ou en gradins à la manière d'un escalier en direction de la zone en plateau (16) qui les entoure.

15. Pochoir selon l'une des revendications précédentes, dans lequel la surface des zones en plateau (16) à l'extérieur des ouvertures (12) est dotée d'une microstructure régulière, aléatoire ou pseudo aléatoire.

16. Pochoir selon l'une des revendications précédentes, dans lequel la surface des zones en plateau (16) ou la totalité de la surface libre de la couche en relief (11) sont pourvues d'un revêtement (17).
